# EUROPEAN PATENT APPLICATION

(11) **EP 3 332 986 A1**
(43) Date of publication of application: **13.06.2018**
(21) Application number: 16203120.7
(22) Date of filing: 09.12.2016
(51) Int. Cl.: B60B 33/00, B60B 33/04

(54) **A CASTER WHEEL ASSEMBLY AND A WHEELCHAIR COMPRISING THE SAME**

(71) Applicant: Permobil AB, 861 23 Timrå (SE)
(72) Inventor: Bergman, Håkan, 861 33 Timrå (SE); Van de Wal, Herbert, 865 33 Alnö (SE)
(74) Representative: Kransell & Wennborg KB

(57) **Abstract**

The present disclosure relates to a caster wheel assembly (1), comprising: a caster housing (3) provided with an axial channel, and a spindle shaft (5) configured to be received by the channel (3a) of the caster housing, and wherein the spindle shaft (5) defines a spindle shaft axis (A1), the caster housing (3) and the spindle shaft (5) being configured to rotate freely relative to each other, wherein the spindle shaft (5) is tilted relative to a vertical plane when the caster wheel assembly (1) is in use and arranged on a horizontal support surface, thereby providing a trail functionality.

## Description

### TECHNICAL FIELD

The present disclosure generally relates to a caster wheel assembly. In particular, it relates to a caster wheel assembly which has a trail-functionality.

### BACKGROUND

Wheelchairs are generally provided with a pair of non-swivelling wheels, such as drive wheels in the case of powered wheelchairs. Wheelchairs may also be provided with caster wheels, in particular swivel caster wheels facilitating rotation of the wheelchair in any direction.

Caster wheels of the type that swivel are known to flutter or to shimmy. Flutter or shimmy occurs when a caster wheel starts to oscillate side-to-side. In the case of flutter, the side-to-side oscillation is obtained by forced oscillation and in case of shimmy by self-excited oscillation. These side-to-side oscillations are highly undesirable because the direction of orientation of the caster wheel becomes uncontrollable. Further, the oscillations may give rise to vibrations in the seat which may be experienced as uncomfortable for the user. Normally oscillation occurs when the wheel is not in full contact with the ground, and the wheel may have turned in any direction when full ground contact is regained. Oscillations may also occur without the caster wheels losing contact with the ground in case the wheelchair speed is sufficiently high.

There are a number of methods of reducing flutter and shimmy. US 4,989,920, for example, discloses a caster wheel assembly which has a trail functionality to increase the critical velocity, i.e. the velocity at which the caster wheel will begin to self-oscillate, to reduce shimmy for normal operating speeds. According to US 4,989,920 trail is the distance with which the axle of the caster wheel is offset behind the vertical pivot of the wheel during travel.

### SUMMARY

In US 4,989,920 the upright rod is vertical when the caster wheel assembly is in use and rests on a horizontal support surface. In order to increase the trail and thus increase the critical speed at which oscillations commence, the fork would have to be offset even further behind the vertical pivot during travel. This would lead to a greater footprint of the wheelchair, because the caster wheels would extend further away from the chassis during travel. Moreover, as the caster wheel swivels about the vertical swivel axis, the caster wheel could collide with the chassis if the trail is made too large and in case the chassis design is not modified. With a very large trail, it would become essentially impossible to adapt the chassis to accommodate caster wheel swivelling.

An object of the present disclosure is to provide a caster wheel assembly which solves, or at least mitigates the problems of the prior art.

There is hence according to a first aspect of the present disclosure provided a caster wheel assembly, comprising: a caster housing provided with an axial channel, and a spindle shaft configured to be received by the channel of the caster housing, and wherein the spindle shaft defines a spindle shaft axis, the caster housing and the spindle shaft being configured to rotate freely relative to each other, wherein the spindle shaft is tilted relative to a vertical plane when the caster wheel assembly is in use and arranged on a horizontal support surface, thereby providing a trail functionality.

By means of the tilted configuration of the spindle shaft, relative to a vertical plane, when caster wheel assembly is mounted to e.g. a vehicle such as a wheelchair, the distance between the vertical axis through the wheel axle and the spindle shaft axis will increase in a direction towards the horizontal support surface on which caster wheel assembly is arranged. The trail, which is the distance between the vertical axis through the wheel axle and the spindle shaft axis, at ground level where the caster wheel touches the support surface, will thus become larger than what could be obtained with a traditional caster wheel assembly where the spindle shaft is arranged vertically and the two aforementioned axes are parallel to each other. The footprint of the caster wheel assembly, and thus of e.g. a wheelchair may thereby be reduced.

One embodiment comprises a caster wheel fork having a wheel axle configured to be arranged offset from the spindle shaft axis.

According to one embodiment the wheel axle defines the origin of a coordinate system having a first axis that is horizontal and a second axis that is vertical, wherein the spindle shaft axis intersects the second axis when the caster wheel assembly is in use and arranged on a horizontal support surface.

According to one embodiment the spindle shaft has an upper end and a lower end, wherein the distance between the spindle shaft axis and the second axis increases along the length of the spindle shaft in a direction from the upper end towards the lower end.

According to one embodiment the angle between the spindle shaft and the second axis is at least 3 degrees.

According to one embodiment the angle between the spindle shaft and the second axis is at least 5 degrees.

According to one embodiment the caster wheel fork is configured to be fixedly connected to the spindle shaft.

According to one embodiment the caster wheel fork is configured to be fixedly connected to the caster housing.

There is according to a second aspect of the present disclosure provided a wheelchair comprising: a chassis, and a caster wheel assembly according to the first aspect presented herein, configured to be pivotally coupled to the chassis.

According to one embodiment the wheelchair is an electrically powered wheelchair.

Generally, all terms used in the claims are to be interpreted according to their ordinary meaning in the technical field, unless explicitly defined otherwise herein. All references to "a/an/the element, apparatus, component, means, etc." are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a perspective view of an example of a caster wheel assembly;
Fig. 2 shows a side view of the caster wheel assembly in Fig. 1, including a caster wheel; and
Fig. 3 schematically shows a side view of a wheelchair provided with the caster wheel assembly in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

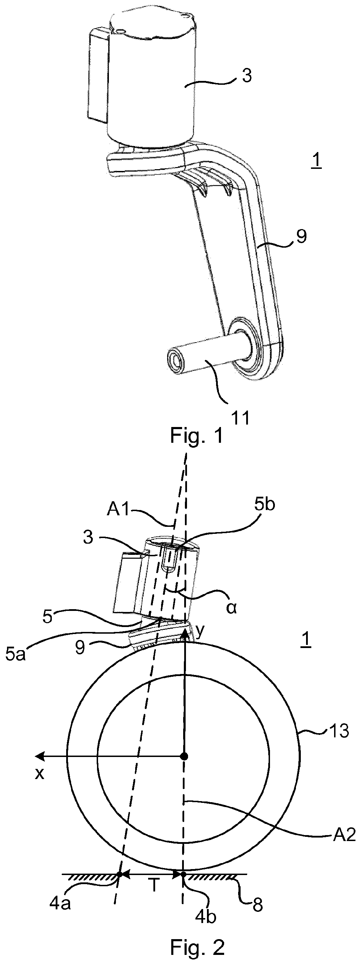

Fig. 1 shows an example of a caster wheel assembly 1 for a wheelchair. Caster wheel assembly 1 comprises a caster housing 3, a spindle shaft 5 configured to be received by the caster housing 3, as shown in Fig. 2, and a caster wheel fork 9 which has a wheel axle 11 for mounting a caster wheel thereto. The spindle shaft 5 is configured to rotate freely inside the caster housing 3.

The caster wheel fork 9 is configured to be fixedly connected to the spindle shaft 5 so that when the spindle shaft 5 rotates relative to the caster housing 3, the caster wheel fork 9 rotates concurrently with the spindle shaft 5.

According to the present example, the caster housing 3 is configured to be fixedly or immovably mounted to an arm, such as a swing arm, which is configured to be connected to the chassis of a wheelchair.

As an alternative to the above configuration, the spindle shaft may be configured to be fixedly or immovably mounted to the arm, such as a swing arm, which is configured to be connected to the chassis of a wheelchair. In this case, the caster housing is configured to rotate freely relative to the fixed spindle shaft, and the caster wheel fork is configured to be mounted to the caster housing so that when the caster housing rotates relative to the spindle shaft, the caster wheel fork rotates relative to the spindle shaft, concurrently with the caster housing.

Fig. 2 shows a side view of the caster wheel assembly 1, including a caster wheel 13 mounted to the caster wheel fork 9. According to the present example the wheel axle 11 is configured to be arranged offset relative to a spindle shaft axis A₁ defined by the longitudinal extension of the spindle shaft 5. In this manner, conventional trail functionality is provided. The wheel axle may instead, according to another variation, be arranged in line with the spindle shaft axis A₁.

The wheel axle 11 defines the origin O of a coordinate system which has a first axis X and a second axis Y. It should be noted that the first axis X and the second axis Y are merely defined herein to facilitate the description of the tilted spindle shaft, and are thus "imaginary".

The spindle shaft 5 is configured to be arranged in an inclined manner, or tilted, relative to a vertical plane when the caster wheel assembly 1 is mounted to a chassis of a wheelchair, and placed on a horizontal support surface. An axis A₂ extending parallel and coinciding with the second axis Y, and which extends vertically through the wheel axle 11 hence intersects the axis A₁ defined by the spindle shaft 5. There is thus an angle α between axis A₁ and axis A₂. Hereto, the distance between axis A₂ and the spindle shaft axis A₁ increases in the direction towards the ground support 8 on which the caster wheel assembly 1 is arranged in use. The distance between axis A₁ and axis A₂ at the point 4a where axis A₁ intersects the ground support 8 and the point 4b where axis A₂ intersects the ground support 8 is the trail T, which gives rise to the trail functionality. This definition is more general than the one given in the prior art, which represents the special case when the two axes shown in Fig. 2 are parallel. The trail T may thus be the result of two components, one obtained due to the tilting of the spindle shaft 5, and one due to the possibility to arrange the wheel axle offset relative to the spindle shaft axis.

In use, when the caster wheel assembly 1 is mounted to a chassis or a swing arm/pivot arm of for example a wheelchair and the wheelchair is arranged on a horizontal ground support 8, the first axis X is horizontal and the second axis Y is vertical. In this case, the distance between the spindle shaft axis A₁ and the axis A₂ increases when moving along the second axis Y in a direction towards the ground support 8. A different manner to express this is that the spindle shaft 5 has an upper end 5b and a lower end 5a, and the distance between the spindle shaft axis A₁ and the axis A₂ increases along the length of the spindle shaft 5 in a direction from the upper end 5b towards the lower end 5a.

The angle α between the spindle shaft 5, in particular the spindle shaft axis A₁, and axis A₂ may for example be at least 3 degrees, for example at least 4 degrees, such as at least 5 degrees or at least 6 degrees.

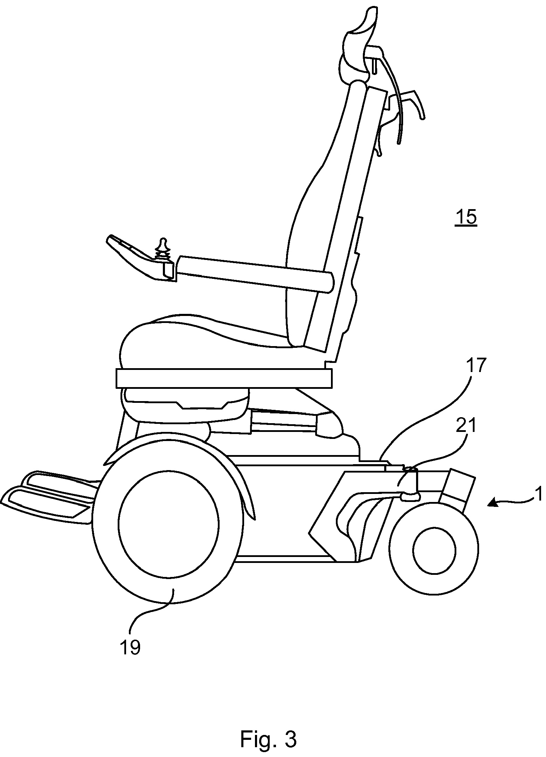

Fig. 3 shows an example of a wheelchair 15. The wheelchair 15 may for example be an electrically powered wheelchair. The wheelchair 15 comprises a chassis 17, drive wheels 19, and caster wheel assemblies 1, each comprising a respective arm 21, for example a swing arm. Each caster wheel assembly 1 is connected to a respective arm 21.

In case of an electrically powered wheelchair, the wheelchair 15 may be any of a front wheel drive type wheelchair, a midwheel drive type wheelchair, rear wheel drive type, or any other type of drive configuration.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A caster wheel assembly (1), comprising:
a caster housing (3) provided with an axial channel, and
a spindle shaft (5) configured to be received by the channel of the caster housing, and wherein the spindle shaft (5) defines a spindle shaft axis (A1),
the caster housing (3) and the spindle shaft (5) being configured to rotate freely relative to each other,
wherein the spindle shaft (5) is tilted relative to a vertical plane when the caster wheel assembly (1) is in use and arranged on a horizontal support surface, thereby providing a trail functionality.

2. The caster wheel assembly (1) as claimed in claim 1, comprising a caster wheel fork (9) having a wheel axle (11) configured to be arranged offset from the spindle shaft axis (A1).

3. The caster wheel assembly (1) as claimed in claim 1 or 2, wherein the wheel axle (11) defines the origin (O) of a coordinate system having a first axis (X) that is horizontal and a second axis (Y) that is vertical, wherein the spindle shaft axis (A1) intersects the second axis (Y) when the caster wheel assembly (1) is in use and arranged on a horizontal support surface.

4. The caster wheel assembly (1) as claimed in claim 3, wherein the spindle shaft (5) has an upper end (5b) and a lower end (5a), wherein the distance between the spindle shaft axis and the second axis increases along the length of the spindle shaft in a direction from the upper end (5b) towards the lower end (5a).

5. The caster wheel assembly (1) as claimed in claim 3 or 4, wherein the angle between the spindle shaft (5) and the second axis is at least 3 degrees.

6. The caster wheel assembly (1) as claimed in claim 5, wherein the angle between the spindle shaft and the second axis is at least 5 degrees.

7. The caster wheel assembly (1) as claimed in any of the preceding claims, wherein the caster wheel fork (9) is configured to be fixedly connected to the spindle shaft (5).

8. The caster wheel assembly (1) as claimed in any of claims 1-6, wherein the caster wheel fork (9) is configured to be fixedly connected to the caster housing (3).

9. A wheelchair (15) comprising:
a chassis (17), and
a caster wheel assembly (1) as claimed in any of claims 1-8, configured to be pivotally coupled to the chassis (17).

10. The wheelchair (15) as claimed in claim 9, wherein the wheelchair (15) is an electrically powered wheelchair.
